(19) Europäisches Patentamt
European Patent Office
Office européen des brevets

(11) **EP 3 375 923 B1**

(12) **EUROPÄISCHE PATENTSCHRIFT**

(45) Veröffentlichungstag und Bekanntmachung des Hinweises auf die Patenterteilung:
**28.04.2021 Patentblatt 2021/17**

(21) Anmeldenummer: **18162201.0**

(22) Anmeldetag: **16.03.2018**

(51) Int Cl.:
*D04H 1/4374* (2012.01)   *D04H 1/4382* (2012.01)
*D04H 1/559* (2012.01)   *D04H 1/56* (2006.01)
*B32B 5/02* (2006.01)   *B32B 5/08* (2006.01)
*B32B 5/26* (2006.01)   *B32B 5/28* (2006.01)
*B32B 7/12* (2006.01)   *B60R 13/08* (2006.01)
*G10K 11/168* (2006.01)

(54) **SCHALLABSORBIERENDES TEXTILKOMPOSIT**

SOUND ABSORBING TEXTILE COMPOSITE

COMPOSITE TEXTILE INSONORISANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.03.2017 DE 102017002552**
**04.07.2017 EP 17179635**
**05.07.2017 EP 17179777**

(43) Veröffentlichungstag der Anmeldung:
**19.09.2018 Patentblatt 2018/38**

(73) Patentinhaber: **Carl Freudenberg KG**
**69469 Weinheim (DE)**

(72) Erfinder:
• **WEIK, Angela**
**68782 Brühl (DE)**
• **VILLING-FALUSI, Sandra**
**68542 Heddesheim (DE)**
• **RUTSCH, Peter**
**69518 Abtsteinach (DE)**

(56) Entgegenhaltungen:
CH-A5- 693 409      GB-A- 2 407 296
JP-A- 2001 205 725   JP-A- 2002 161 464
US-A1- 2005 026 527

**Beschreibung**

Technisches Gebiet

Die Erfindung betrifft ein schallabsorbierendes Textilkomposit. Die Erfindung betrifft ferner ein Verfahren zu seiner Herstellung sowie seine Verwendung zur Schallabsorption im Automobilbereich.

Stand der Technik

In US 5298694 A wird eine Methode zur Schallabsorption beschrieben, bei welcher ein akustisch isolierender Vliesstoff eingesetzt wird, welcher einen Anteil an Mikrofasern (meltblown microfibers) gemischt mit einem Anteil an gekräuselten Bauschfasern (crimped bulking fibers) aufweist. Die Mikrofasern umfassen einen mittleren Faserdurchmesser von unter 15 $\mu$m, vorzugsweise von 5 bis 10 $\mu$m, und liegen verteilt mit einem Gewichtsprozentverhältnis von 40:60 bis 95:5 im gekräuselten Stapelfaservliesstoff vor. Die akustische Wirksamkeit entsteht bei diesem Materialaufbau dadurch, dass durch den erhöhten Einsatz von Mikrofasern eine höhere innere Oberfläche im Vliesstoff erreicht wird, so dass die kinetische Energie der Schallwellen vermehrt in Wärmeenergie umgewandelt werden kann. Nachteilig an dem beschriebenen Vliesstoff ist, dass der Luftströmungswiderstand in den einzelnen Schichten nicht geregelt oder vorgegeben werden kann so dass die schallabsorbierenden Eigenschaften des akustisch isolierenden Vliesstoffs nicht optimal sind.

Ferner sind Isolationsmaterialien zur Absorption von Schallwellen und zur thermischen Isolierung aus der DE 10163576 B4 bekannt, welche aus zwei unterschiedlichen thermoplastischen Matrixfasern (im Bereich von 0,8 und 1,7 dtex) sowie einem thermoplastischen Schmelzfaseranteil (2,2 dtex) bestehen. Dadurch wird ein mittlerer Faserdurchmesser von 1,3 dtex im gesamten Vliesstoff erzielt. Es wird deutlich, dass durch einen reduzierten Einsatz von Bindefasern (10 % des Fasergemischs) ein Vliesstoff entsteht, der gute Drapiereigenschaften besitzt und zudem eine innere Festigkeit des Vliesstoffes aufweist, welche aufgrund von sowohl mechanischer als auch thermischer Verfestigung erzielt wird. Prozessbedingt ist es jedoch nicht möglich die Akustik des Isolationsmaterials gezielt einzustellen. Darüber hinaus kann die Absorption der Schallwellen durch den Einsatz von feineren Stapelfasern nicht weiter verbessert werden, da nach dem heutigem Stand der Technik feinere Fasern unter 0,5 dtex nicht mehr prozesssicher auf Krempelanlagen gefahren werden können.

EP 1058618 B1 beschreibt ein schallabsorbierendes Dünnschichtlaminat, welches aus einer offenporigen Trägerschicht und einer zweiten offenporigen Faserschicht, besteht. Bei der offenporigen Trägerschicht kann es sich entweder um ein Faservlies mit einem Flächengewicht von weniger als 2000 g/m$^2$ und einer Dicke von weniger als 50 mm handeln oder um einen ultraleichten Kunststoff-Schaum mit einer Dichte von 16 bis 32 kg/m$^3$ und einer Dicke von mindestens 6 mm. Die zweite offenporige Faserschicht wird aus schmelzgeblasenen Mikrofasern erzeugt, welche einen Faserdurchmesser von bevorzugt 2 bis 5 $\mu$m aufweisen. Zudem wird ein Luftströmungswiderstand von 500 bis 4000 Ns/m$^3$ beschrieben. Durch den laminatartigen Aufbau des schallabsorbierenden Dünnschichtlaminats wird nun eine Strömungsschicht bereitgestellt, welche akustisch eingestellt werden kann. Nachteilig bei diesem Verbund ist die Tastsache, dass die Trägerschicht keine explizite akustische Relevanz aufzeigt

CH 693409 A5 offenbart ein schallabsorbierendes Dünnschichtlaminat aufweisend akustische Absorptionseigenschaften in den tieferen Frequenzen, das zur Schallabsorption im Automobilbereich verwendet wird.

Darstellung der Erfindung

Der Erfindung liegt die Aufgabe zu Grunde ein schallabsorbierendes Material bereitzustellen, das die Nachteile des Stands der Technik zumindest teilweise ausräumt. So soll die akustische Absorption einfach einstellbar sein und das Material soll mit einer hohen Kompressibilität und einem sehr guten Rückstellvermögen bei gleichzeitig geringem Flächengewicht herstellbar sein.

Darüber hinaus soll das schallabsorbierende Material in dem für die Automobilindustrie wichtigen Frequenzbereich von 800 Hz bis 2000 Hz sehr gute akustische Absorptionseigenschaften zeigen.

Diese Aufgabe wird gelöst durch ein schallabsorbierendes Textilkomposit, insbesondere ein Vliestoffkomposit umfassend

a) mindestens eine offenporige Trägerlage umfassend grobe Stapelfasern mit einem Titer von 3 dtex bis 12 dtex in einem Anteil von 5 Gew.% bis 85 Gew.% und feine Stapelfasern mit einem Titer von 0,5 dtex bis 2,9 dtex in einem Anteil von 10 Gew.% bis 90 Gew.% als Gerüstfasern, und
b) eine auf der Trägerlage angeordnete mikroporöse Strömungslage umfassend Mikrofasern mit einem Faserdurchmesser von unter 10 $\mu$m,

wobei der Strömungswiderstand des schallabsorbierenden Textilkomposits von 250 Ns/m$^3$ bis 5000 Ns/m$^3$, vorzugsweise von 250 Ns/m$^3$ bis 4000 Ns/m$^3$, noch bevorzugter von 250 Ns/m$^3$ bis 3000 Ns/m$^3$, insbesondere von 250 Ns/m$^3$ bis 2000 Ns/m$^3$ beträgt, dadurch gekennzeichnet, dass die Trägerlage zumindest teilweise verschmolzene Kern/Mantel-Fasern, als weitere Fasern enthält.

Überraschend wurde gefunden, dass mit dem erfindungsgemäßen Textilkomposit die oben beschriebenen Nachteile aus dem Stand der Technik vermieden werden können. Ferner wurde gefunden, dass ein Textilkomposit des obigen Aufbaus in dem für die Automobilindustrie wichtigen Frequenzbereich von 800 Hz bis 2000 Hz, hervorragende akustische Absorptionseigenschaften zeigt.

Ohne sich erfindungsgemäß auf einen Mechanismus festzulegen, wird vermutet, dass der gefundene überraschend hohe Schallabsorptionsgrad auf eine synergistische Wechselwirkung zwischen den Feinfasern und den Grobfasern der Trägerlage in Kombination mit der Strömungslage zurückzuführen ist. So wird vermutet, dass die besondere Auswahl von feinen Stapelfasern mit einem Titer von 0,5 dtex bis 2,9 dtex und groben Stapelfasern mit einem Titer von 3 dtex bis 12 dtex in der Trägerlage die Ausbildung einer für die Schallabsorption besonders geeignete Gerüststruktur ermöglicht, die selbst in der Lage ist Schallwellen zu absorbieren. Denn durch die geeignete Auswahl von feinen und groben Stapelfasern wird es ermöglicht die Trägerlage mit einer hohen Kompressibilität und einem hohen Rückstellvermögen auszustatten, wodurch die Strömungslage auf der Trägerlage optimal in Schwingung ge-bracht und somit besonders effizient Schallenergie absorbiert werden kann, gemäß der Wirkungsweise eines "biegeweichen Plattenabsorbers".

Darüber hinaus ermöglicht die Kombination aus offenporiger Trägerlage und mikroporöser Strömungslage eine einfache und gezielte Einstellung und Variationsfähigkeit der akustischen Eigenschaften des Textilkomposits. Ferner wurde gefunden, dass das erfindungsgemäße Textilkomposit mit hoher Kompressibilität und gutem Rückstellvermögen bei gleichzeitig niedrigen Flächengewichten gefertigt werden kann. So weist das Textilkomposit in einer bevorzugten Ausführungsform der Erfindung eine Kompressibilität von 70 % bis 100 %, noch bevorzugter von 75 % bis 100 % und insbesondere von 80 % bis 100 % und/oder ein Rückstellvermögen von 70 % bis 100 % auf, noch bevorzugter von 75 % bis 100 % und insbesondere von 80 % bis 100 %. Hierdurch kann das Textilkomposit leicht komprimiert werden und sich somit gleichzeitig sehr gut in die vorgegebenen Bauräume legen, da es durch das gute Rückstellvermögen sehr gut im Bauraum wieder aufspringen kann. Dies ermöglicht einen Einbau auch in Bauräumen mit schwierigen Geometrien und unterschiedlichen Dickenabmessungen.

Die Trägerlage kann grundsätzlich ein Gewebe, Gewirke, Gestrick und/oder ein Vliesstoff sein. Erfindungsgemäß bevorzugt ist die Trägerlage ein Vliesstoff gemäß DIN EN ISO 9092, wodurch ein Vliesstoffkomposit gebildet wird.

Der Fasertiter der groben Stapelfasern der Trägerlage beträgt von 3 dtex bis 12 dtex, und insbesondere von 3 dtex bis 9 dtex. Die groben Stapelfasern geben dem Textilkomposit die nötige Struktur und gewährleisten somit, dass auch im verbauten Zustand das Textilkomposit dimensionsstabil bleibt.

Der Anteil der groben Stapelfasern ist vorzugsweise von 10 Gew.% bis 85 Gew.%, noch bevorzugter von 20 Gew.% bis 80 Gew.% noch bevorzugter von 30 Gew.% bis 80 Gew.%, noch bevorzugter von 40 Gew.% bis 80 Gew.%, noch bevorzugter von 50 Gew.% bis 80 Gew.% und insbesondere von 60 Gew.% bis 80 Gew.%, jeweils bezogen auf das Gesamtgewicht der Trägerlage.

Der Fasertiter der feinen Stapelfasern der Trägerlage des erfindungsgemäßen Textilkomposits beträgt von 0,5 dtex bis 2,9 dtex. In einer bevorzugten Ausführungsform beträgt der Fasertiter der feinen Stapelfasern von 0,5 dtex bis 2,5 dtex, und insbesondere von 0,5 dtex bis 2,0 dtex. Durch den Einsatz von feinen Stapelfasern in der Trägerlage kann auch in dieser Lage Schallenergie in Wärmeenergie umgewandelt werden aufgrund der nunmehr größeren inneren Oberfläche der Trägerlage.

Die Trägerläge enthält in einer bevorzugten Ausführungsform der Erfindung die feinen Stapelfasern in einem Anteil von 10 Gew.% bis 80 Gew.%, noch bevorzugter von 10 Gew.% bis 70 Gew.%, noch bevorzugter von 10 Gew.% bis 60 Gew.%, noch bevorzugter von 10 Gew.% bis 50 Gew.%, noch bevorzugter von 10 Gew.% bis 40 Gew.% und insbesondere von 10 Gew.% bis 30 Gew.%, jeweils bezogen auf das Gesamtgewicht der Trägerlage.

Erfindungsgemäß sind die Gerüstfasern Stapelfasern. Im Unterschied zu den gegebenenfalls in der Trägerlage enthaltenen Bindefasern liegen die Gerüstfasern nicht oder nur unwesentlich verschmolzen vor. Stapelfasern weisen im Unterschied zu Filamenten, die theoretisch eine unbegrenzte Länge aufweisen, eine definierte Faserlänge auf. Erfindungsgemäß bevorzugt weisen die als Gerüstfasern eingesetzten feinen und groben Stapelfasern, unabhängig voneinander eine Stapellänge von 20 mm bis 80 mm auf, noch bevorzugter von 25 mm bis 80 mm, insbesondere von 30 mm bis 80 mm. Als Gerüstfasern können Naturfasern, synthetische Fasern oder Gemische hiervon eingesetzt werden. Bevorzugt werden synthetische Fasern eingesetzt.

In einer bevorzugten Ausführungsform der Erfindung enthalten die als Gerüstfasern eingesetzten feinen und groben Stapelfasern, unabhängig voneinander mindestens ein Polymer ausgewählt aus der Gruppe, bestehend aus: Polyacrylnitril, Polyvinylalkohol, Viskose-, Polyamide, insbesondere Polyamid 6 und Polyamid 6.6, bevorzugt Polyolefine und ganz besonders bevorzugt Polyester, insbesondere Polyethylenterephthalat, Polyethylennaphthalat und Polybutylenterephthalat, Gemische und/oder Copolymere hiervon. Vorzugsweise enthalten die Gerüstfasern das mindestens eine Polymer in einem Anteil von mindestens 90 Gew.%, noch bevorzugter mindestens 95 Gew.%, insbesondere mehr als 97 Gew.%.

In einer besonders bevorzugten Ausführungsform der Erfindung weisen die Gerüstfasern mindestens ein Polymer ausgewählt aus der Gruppe, bestehend aus: Polyester, insbesondere Polyethylentherephtalat, Polyamid und Gemische oder Copolymere hiervon, auf. In einer besonders bevorzugten Ausführungsform der Erfindung sind die Gerüstfaser Polyesterfasern, insbesondere aus Polyethylentherephtalat. Vorteil hieran ist das selbsterlöschende Brennverhalten des Polyethylentherephtalats, welches wiederum relevant für den Einsatz des Textilkomposit im Automobilbereich ist.

Neben den feinen Stapelfasern und den groben Stapelfasern enthält die Trägerlage noch weitere Fasern. Erfindungsgemäß enthält die Trägerlage zumindest teilweise verschmolzene Kern/Mantel-Bindefasern als weitere Fasern. Als Bindefasern können die üblichen zu diesem Zweck verwendeten Fasern eingesetzt werden, sofern sie zumindest teilweise thermisch verschmolzen werden können. Bindefasern können einheitliche Fasern oder auch Mehrkomponentenfasern sein. Erfindungsgemäß besonders geeignete Bindefasern sind Fasern bei denen die bindende Komponente einen Schmelzpunkt aufweist, der unterhalb des Schmelzpunkts der zu bindenden Gerüstfasern liegt, vorzugsweise unterhalb von 250°C, noch bevorzugter von 70 bis 235°C, noch bevorzugter von 125 bis 225°C, besonders bevorzugt von 150 bis 225°C. Geeignete Bindefasern sind insbesondere Fasern, die thermoplastische Polyester und/oder Copolyester, insbesondere Polybutylenterephthalat, Polyolefine, insbesondere Polypropylen, Polyamide, Polyvinylalkohol, sowie deren Copolymere und Gemische enthalten und/oder aus diesen Polymeren bestehen.

Kern/Mantel-Fasern enthalten mindestens zwei Faserpolymere mit unterschiedlicher Erweichungs- und/oder Schmelztemperatur. Bevorzugt bestehen die Kern/Mantel-Fasern aus diesen zwei Faserpolymeren. Dabei ist diejenige Komponente, die die niedrigere Erweichungs- und/oder Schmelztemperatur aufweist, an der Faseroberfläche (Mantel) und diejenige Komponente, die die höhere Erweichungs- und/oder Schmelztemperatur aufweist, im Kern zu finden.

Bei Kern/Mantel-Fasern kann die Bindefunktion durch die Materialien, die an der Oberfläche der Fasern angeordnet sind, ausgeübt werden. Für den Mantel können die verschiedensten Materialien eingesetzt werden. Bevorzugte Materialien für den Mantel sind erfindungsgemäß Polybutylenterephthalat, Polyamid, Polyethylen, Copolyamide und/oder auch Copolyester. Für den Kern können ebenfalls die verschiedensten Materialien eingesetzt werden. Bevorzugte Materialien für den Kern sind erfindungsgemäß Polyester, insbesondere Polyetylenterephthalat und/oder Polyethylennaphthalat und/oder Polyolefine.

Durch die Verwendung von Kern-Mantel-Bindefasern kann eine besonders homogene Verteilung der Bindemittelkomponente im Vliesstoff erzielt werden.

Die Trägerlage enthält diese Bindefasern vorzugsweise in einem Anteil von 5 Gew.% bis 50 Gew.%, noch bevorzugter von 10 Gew.% bis 50 Gew.%, noch bevorzugter von 10 Gew.% bis 40 Gew.%, insbesondere von 10 Gew.% bis 30 Gew.%, jeweils bezogen auf das Gesamtgewicht der Trägerlage.

Erfindungsgemäß bevorzugt ist die Trägerlage durch die zumindest teilweise verschmolzenen Bindefasern gebunden und verfestigt. Bevorzugt sind die teilweise verschmolzenen Bindefasern ohne mechanische Beanspruchung verschmolzen, beispielsweise mit einem Durchlaufofen. Hieran ist vorteilhaft, dass der Vliesstoff hoch voluminös hergestellt werden kann und nicht durch mechanische Einwirkung an Volumen verliert. In einer weiteren bevorzugten Ausführungsform der Erfindung liegt das Volumenverhältnis Luft zu Faser in der Trägerlage von 75:1 bis 250:1, noch bevorzugter von 100:1 bis 225:1, insbesondere von 125:1 bis 200:1.

In einer weiteren Ausführungsform der Erfindung ist die Trägerlage bindergebunden, vorzugsweise zusätzlich zu der Verfestigung mit den Bindefasern. Als Binder können Polyacrylate, Polystyrole, Polyvinylacetatethylene, Polyurethane sowie deren Gemische und CoPolymere eingesetzt werden.

Erfindungsgemäß bevorzugt ist die Trägerlage so leicht verfestigt, dass sich das schallabsorbierende Textilkomposit leicht drapieren und komprimieren lässt und somit in den verschiedensten Bauräumen eingesetzt werden kann.

Die Strömungslage kann grundsätzlich ein Gewebe, Gewirke, Gestrick und/oder ein Vliesstoff sein. Erfindungsgemäß bevorzugt ist die Trägerlage ein Vliesstoff gemäß DIN EN ISO 9092, wodurch ein Vliesstoffkomposit gebildet wird.

Unter einer mikroporösen Strömungslage ist erfindungsgemäß eine mikroporöse Lage zu verstehen, welche einen spezifischen Strömungswiderstand, insbesondere von mehr als 250 Ns/m$^3$, beispielsweise von 250 Ns/m$^3$ bis 5000 Ns/m$^3$, vorzugsweise von 250 Ns/m$^3$ bis 4000 Ns/m$^3$, noch bevorzugter von 250 Ns/m$^3$ bis 3000 Ns/m$^3$, insbesondere von 250 Ns/m$^3$ bis 2000 Ns/m$^3$, aufweist. Vorteilhaft an dem Versehen der Trägerlage mit der Strömungslage ist, dass die Schallabsorptionseigenschaften der Trägerlage verbessert werden können. Dadurch kann das Flächengewicht der Trägerlage gering gehalten werden und dennoch ein Produkt mit hervorragenden akustischen Eigenschaften erhalten werden.

Die Einstellung des Strömungswiderstandes der Strömungslage kann auf dem Fachmann bekannte Art und Weise durch gezielte Einstellung der Porosität bzw. der Dichte erhalten werden. Bei einem zu porösen Material würde nicht genug Reibung an den Fasern entstehen und so nicht genügend kinetische Energie in Wärmeenergie umgewandelt werden können, wodurch kaum Absorption möglich ist. Bei einem zu dichtem Material hingegen, würden die Schallwellen an der Materialoberfläche hauptsächlich reflektiert und könnten somit nicht im Material absorbiert werden.

Erfindungsgemäß enthält die Strömungslage Mikrofasern mit einem Titer von unter 10 $\mu$m, bevorzugt von 0,5 $\mu$m bis 5 $\mu$m, noch bevorzugter von 1 $\mu$m bis 3 $\mu$m. Vorteilhaft an der Verwendung von Mikrofasern ist die Tatsache, dass durch den geringen Faserdurchmesser eine sehr große innere Oberfläche im Vliesstoff bereitgestellt wird, an der die Schallenergie besonders gut absorbiert werden kann. Fasern mit einer derartigen Feinheit können auf einfache Weise, beispielsweise mit dem Meltblown-Verfahren, erhalten werden (Meltblown-Fasern), wodurch ein Meltblown-Vliesstoff gebildet wird. Vorteilhaft an der Verwendung von Meltblown-Fasern ist, dass mit ihnen auf einfache Weise Vliesstoffe mit einer hohen Dichte und guten akustischen Eigenschaft erhalten werden können.

Als Mikrofasern für die Strömungslage werden bevorzugt synthetische Fasern eingesetzt. Diese weisen vorzugsweise mindestens ein Polymer, ausgewählt aus der Gruppe, bestehend aus: Polyolefine, insbesondere Polypropylen, Polyethylentherephtalat, Polyamid, Gemischen und/oder Copolymeren hiervon, auf. Vorzugsweise enthalten die Mikrofasern die vorgenannten Polymere, Gemische und/oder Copolymere hiervon in einem Anteil von mindestens 90 Gew.%, noch bevorzugter mehr als 95 Gew.%, insbesondere mehr als 97 Gew.%.

Vorzugsweise weist die Strömungslage die Mikrofasern in einer Menge von mehr als 50 Gew.%, noch bevorzugter mehr als 70 Gew.%, insbesondere mehr als 90 Gew.%, jeweils bezogen auf das Gesamtgewicht der Strömungslage auf.

Das erfindungsgemäße Textilkomposit kann lediglich aus Trägerlage und Strömungslage bestehen. Erfindungsgemäß bevorzugt weist das Textilkomposit jedoch weitere Lagen, insbesondere mindestens eine auf der Strömungslage angeordnete Abdecklage auf. Vorteilhaft hieran ist, dass die Strömungslage besser vor Beschädigung geschützt werden kann. Als besonders geeignet hat sich die Verwendung von Schmelzspinnvliesstoffen als Abdecklage erwiesen. Bevorzugt liegt das Flächenge-wicht der Abdecklage unter 25 g/m$^2$, beispielsweise von 12 g/m$^2$ bis 17 g/m$^2$. Ebenfalls bevorzugt besteht die Abdecklage aus thermoplastischen Filamenten, insbesondere Polypropylen-Filamenten.

Die Trägerlage, die Strömungslage und die gegebenenfalls vorhandene Abdecklage können auf die verschiedensten Weisen miteinander verfügt sein. So ist denkbar, dass die Lagen mittels adhäsiven Materialien miteinander verklebt sind. Wird als Strömungslage ein Meltblown-Vliesstoff eingesetzt, so findet in einer bevorzugten Ausführungsform der Erfindung die Verfügung mit der Strömungslage dadurch statt, dass die Meltblown-Fasern direkt auf die Trägerlage aufgesponnen werden. Hierdurch kann ein Vliesstoffkomposit erhalten werden, bei dem keine definierte Phasengrenze zwischen Trägerlage und Strömungslage erkennbar ist. Dies ermöglicht die Einstellung eines Faserfeinheitsgradienten im Grenzbereich der Träger- und der Strömungslage, was sich vorteilhaft auf die akustischen Eigenschaften auswirkt. Darüber hinaus kann auf eine zusätzliche Klebeschicht verzichtet werden, was sich ebenfalls vorteilhaft auf die akustischen Eigenschaften auswirkt.

Erfindungsgemäß weist das Textilkomposit einen Strömungswiderstand von 250 Ns/m$^3$ bis 5000 Ns/m$^3$, vorzugsweise von 250 Ns/m$^3$ bis 4000 Ns/m$^3$, noch bevorzugter von 250 Ns/m$^3$ bis 3000 Ns/m$^3$, insbesondere von 250 Ns/m$^3$ bis 2000 Ns/m$^3$, und/oder von 350 Ns/m$^3$ bis 5000 Ns/m$^3$, vorzugsweise von 450 Ns/m$^3$ bis 5000 Ns/m$^3$, noch bevorzugter von 550 Ns/m$^3$ bis 5000 Ns/m$^3$ und/oder 350 Ns/m$^3$ bis 2000 Ns/m$^3$, noch bevorzugter von 450 Ns/m$^3$ bis 2000 Ns/m$^3$, und insbesondere von 550 Ns/m$^3$ bis 2000 Ns/m$^3$, auf. Ebenfalls denkbar ist, dass das Textilkomposit einen Strömungswiderstand zwischen 2000 Ns/m$^3$ und 5000 Ns/m$^3$ aufweist, beispielsweise von 2001 Ns/m$^3$ bis 5000 Ns/m$^3$ beträgt. Der Strömungswiderstand des Textilkomposits setzt sich aus den Strömungswiderständen der Trägerlage und der Strömungslage zusammen. Dabei trägt die Strömungslage in der Regel einen deutlich höheren Anteil zum Strömungswiderstand bei. Die Einstellung des Strömungswiderstandes kann deshalb auf einfache Weise durch Auswahl einer geeigneten Strömungslage mit dem gewünschten Strömungswiderstand erfolgen.

Mit dem erfindungsgemäßen Textilkomposit können hervorragende Schallabsorptionsgrad erzielt werden, beispielsweise von 30 % bis 100 %, noch bevorzugter von 40 % bis 100 %, noch bevorzugter von 50 % bis 100 %, jeweils bei 1000 Hz, gemessen nach DIN EN ISO 10534-1. Diese hohen Schallabsorptionsgrade waren für den Fachmann überraschend, da sie höher sind als die Summe der Schallabsorptionsgrade der Strömungslage und Trägerlage, wenn diese für sich alleine gemessen werden.

Das Flächengewicht des Textilkomposits beträgt bevorzugt von 50 g/m$^2$ bis 350 g/m$^2$, noch bevorzugter von 100 g/m$^2$ bis 300 g/m$^2$, und insbesondere von 150 g/m$^2$ bis 250 g/m$^2$. Bei diesen Flächengewichten ist vorteilhaft, dass ein leichtgewichtiges Textilkomposit bereitgestellt werden kann, wodurch wiederum im Automobil aufgrund der Gewichtsersparnis die Emissionen herabgesetzt werden können.

Die Dicke des Textilkomposits beträgt bevorzugt von 5 mm bis 35 mm, noch bevorzugter von 10 mm bis 30 mm, und insbesondere von 15 mm bis 25 mm. Bei Dicken von mindestens 10 mm ist vorteilhaft, dass ein hoher Wandabstand erzeugt wird, so dass auch die mittellangen akustischen Schallwellen der mittleren Frequenzen und die langen Schallwellen der tiefen Frequenzen innerhalb des Textilkomposits absorbiert werden können.

Ein weiterer Gegenstand der Erfindung ist ein Verfahren zur Herstellung des erfindungsgemäßen Textilkomposits mit einem Strömungswiderstand von 250 Ns/m$^3$ bis 5000 Ns/m$^3$, insbesondere von 250 Ns/m$^3$ bis 2000 Ns/m$^3$, umfassend folgende Schritte:

e) Bereitstellen und/oder Herstellen mindestens einer offenporigen Trägerlage umfassend grobe Stapelfasern mit einem Titer von 3 dtex bis 12 dtex in einem Anteil von 5 Gew.% bis 85 Gew.%, und feine Stapelfasern mit einem Titer von 0,5 dtex bis 2,9 dtex in einem Anteil von 10 Gew.% bis 90 Gew.% als Gerüstfasern;
f) Bereitstellen und/oder Herstellen einer mikroporösen Strömungslage umfassend Mikrofasern mit einem Faserdurchmesser von unter 10 $\mu$m;
g) Anordnen der Strömungslage auf der Trägerlage;
h) Verbinden der Trägerlage und der Strömungslage, und/oder umfassend folgende Schritte:

> c') Bereitstellen und/oder Herstellen mindestens einer offenporigen Trägerlage umfassend grobe Stapelfasern mit einem Titer von 3 dtex bis 12 dtex und feine Stapelfasern mit einem Titer von 0,3 dtex bis 2,9 dtex, insbesondere von 0,5 dtex bis 2,9 dtex als Gerüstfasern
> d') Aufspinnen eines Meltblown-Vliesstoffs als mikroporöse Strömungslage umfassend Mikrofasern mit einem Faserdurchmesser von unter 10 $\mu$m auf die Trägerlage.

Wird als Strömungslage ein Meltblown-Vliesstoff eingesetzt, so kann die Verfügung mit der Strömungslage auch dadurch stattfinden, dass die Meltblown-Fasern direkt auf die Trägerlage aufgesponnen werden.
Das Bereitstellen und/oder Herstellen mindestens einer offenporigen Trägerlage kann über die dem Fachmann bekannten Herstellungsprozesse, beispielsweise über Herstellungsprozesse für trockengelegte Stapelfaservliesstoffe, erfolgen. Erfindungsgemäß geeignete Herstellungsverfahren für die Trägerlage sind beispielsweise Krempelverfahren, sowie aerodynamische Verfahren, wie das Airlay- und Airlaid-Verfahren. Bei dem klassischen Krempelverfahren werden in der Regel die Stapelfasern mittels Arbeiter-Wenderwalzen zur Einzelfaser hin aufgelöst und als Flor abgelegt. Dieser kann anschließend, beispielsweise über einen Kreuzleger dubliert werden um ein- oder mehrlagige Vliese zu bilden. Soll ein Vliesstoff mit einer Faseranordnung in Wirrlage hergestellt werden, so eignen sich insbesondere aerodynamischen Verfahren. Die Wirrlage ist vorteilhaft, da hierdurch voluminöse, druckelastische Vliese bei gleichzeitig niedriger Dichte erhalten werden können. Werden Bindefasern eingesetzt, so können diese beispielsweise im Durchlaufofen bis zum Schmelzpunkt erhitzt werden und somit zur Verfestigung des Vliesstoffs dienen. Die thermische Verfestigung kann vor und/oder nach dem Verbinden zwischen Trägerlage und Strömungslage erfolgen. Auch weitere kontaktlose Verfestigungsarten, wie beispielsweise ein Binderauftrag sind möglich. Besonders bevorzugt wird der Vliesstoff ohne mechanische Verfestigungsverfahren verfestigt, da hierdurch die Voluminösität der Trägerlage nicht beeinträchtigt wird.
Die Strömungslage kann ebenfalls durch dem Fachmann bekannte Art und Weise hergestellt werden. Erfindungsgemäß besonders bevorzugt sind Meltblown-Verfahren. Vorteilhaft hieran ist, dass auf einfache Weise kostengünstig feine Fasern in einem Prozessschritt erzeugt werden können.
Das Verbinden der Trägerlage und der Strömungslage kann auf dem Fachmann bekannte Art und Weise, beispielsweise mittels eines Schmelzklebstoffes oder eines Haftklebstoffes erfolgen. Bevorzugt wird der Schmelzklebe- oder Haftklebeauftrag inline auf die Trägerlage aufgebracht und die Strömungslage wird ebenfalls inline über Abwickler zugeführt.
Wird ein Meltblown-Vliesstoff als mikroporöse Strömungslage eingesetzt, so wird dieser in einer besonders bevorzugten Ausführungsform der Erfindung direkt auf die Trägerlage aufgesponnen. Hierdurch kann ein Vliesstoffkomposit erhalten werden, bei dem keine definierte Phasengrenze zwischen Trägerlage und Strömungslage erkennbar ist. Dies ermöglicht die Einstellung eines Faserfeinheitsgradienten im Grenzbereich der Träger- und der Strömungslage was sich wiederum vorteilhaft auf die akustischen Eigenschaften auswirkt. Darüber hinaus kann auf eine zusätzliche Klebeschicht verzichtet werden, was sich wiederum vorteilhaft auf die akustischen Eigenschaften auswirkt.
Zum Schutz der Strömungslage kann diese optional mit einer Abdecklage, wie oben beschrieben, versehen werden. Dies ist insbesondere für Meltblown-Vliesstoffe vorteilhaft.
Das erfindungsgemäße Textilkomposit eignet sich hervorragend zur Schallabsorption im Automobilbereich, beispielsweise als Akustikbauteil für den Automobilinnenraum und insbesondere als schallabsorbierende Einlage in Verkleidungsteilen von Automobilen.

Kurzbeschreibung der Zeichnung

Figur 1: Vergleich des Schallabsorptionsgrades im Impedanzrohr (DIN EN ISO 10534) des erfindungsgemäßen Beispiels 1 mit den Vergleichsbeispielen 2 und 3.

Figur 2: Vergleich des Schallabsorptionsgrades im Impedanzrohr (DIN EN ISO 10534) der im erfindungsgemäßen Beispiel 1 und Vergleichsbeispiel 2 verwendeten Strömungslage mit der im erfindungsgemäßen Beispiel 1 verwendeten Trägerlage sowie mit der im Vergleichsbeispiel 2 verwendeten Trägerlage.

Figur 3: Vergleich des Schallabsorptionsgrades im Impedanzrohr (DIN EN ISO 10534) des erfindungsgemäßen Beispiels 1, des Vergleichsbeispiels 2 und der isolierten Strömungslage.

Figur 4: Vergleich des Schallabsorptionsgrades im Impedanzrohr (DIN EN ISO 10534) des Beispiels 4 mit dem Beispiel 5.

Im Folgenden wird die Erfindung anhand mehrerer Beispiele näher erläutert.

**1. Erfindungsgemäßes Textilkomposit (Beispiel 1)**

Es wird ein Stapelfaservliesstoff mit einem Flächengewicht von 200 g/m$^2$ und einer Dicke von 21 mm bereitgestellt, welcher aus feinen PET-Stapelfasern mit 1,7 dtex und einer Faserlänge von 38 mm und groben PET-Stapelfasern mit einer Feinheit von 3,3 dtex und einer Faserlänge von 64 mm und PET/ Co-PET Bikomponentenfasern mit 4,4 dtex und einer Faserlänge von 51 mm besteht. Der Stapelfaservliesstoff ist sowohl thermisch als auch bindergebunden. Auf diesen Stapelfaservliesstoff wird ein Polypropylen-Meltblown-Vliesstoff mit einem Flächengewicht von 50 g/m$^2$, einer Dicke von 0,5 mm und einem mittleren Faserdurchmesser von 2 μm, mittels Sprühkleber appliziert.

**2. Vergleichsbeispiele 2 und 3**

Vergleichsbeispiel 2: Strömungslage mit nicht optimierter Trägerlage

Es wird ein Stapelfaservliesstoff mit einem Flächengewicht von 350 g/m$^2$ und einer Dicke von 20 mm bereitgestellt, welcher aus groben Polyolefin-Bikomponentenfasern mit einer Feinheit von 17 dtex und einer Faserlänge von 38 mm besteht. Auf diesem Stapelfaservliesstoff wird ein Polypropylen-Meltblown-Vliesstoff mit einem Flächengewicht von 50 g/m$^2$, einer Dicke von 0,5 mm und einem mittleren Faserdurchmesser von 2 μm, mittels Sprühkleber appliziert.

Vergleichsbeispiel 3: 3M Thinsulate (TAI3027)

Es wird ein Stapelfaservliesstoff mit einem Flächengewicht von 330 g/m$^2$ und einer Dicke von 21 mm bereitgestellt, welcher zu 65 Gew.% aus feinen Polypropylen-Meltblown-Fasern und zu 35 Gew.% aus groben PET-Stapelfasern besteht. Zusätzlich befindet sich auf einer Seite des Stapelfaservliesstoffes eine Abdecklage aus 100 Gew.% Polypropylen.

**3. Beispiel 4 und 5**

Beispiel 4:

Es wird ein Stapelfaservliesstoff mit einem Flächengewicht von 200 g/m$^2$ und einer Dicke von 10 mm bereitgestellt, welcher aus 50 Gew.% feinen PET-Stapelfasern mit 0,6 dtex und 50 Gew.% groben PET-Stapelfasern mit einer Feinheit von 4,4 dtex besteht.

Beispiel 5:

Es wird ein Stapelfaservliesstoff mit einem Flächengewicht von 200 g/m$^2$ und einer Dicke von 10 mm bereitgestellt, welcher aus 80 Gew.% feinen PET-Stapelfasern mit 0,6 dtex und 20 Gew.% groben PET-Stapelfasern mit einer Feinheit von 4,4 dtex besteht.

**4. Bestimmung des Strömungswiderstandes von Beispiel 1 und Vergleichsbeispiel 2**

In Bezug auf Beispiel 1 und Vergleichsbeispiel 2 wurden die Strömungswiderstände der Trägerlagen und der Strömungslagen unabhängig voneinander sowie in Kombination nach DIN EN 29053 gemessen.

| Messproben | Dicke in mm | Strömungswiderstand in Ns/m$^3$ |
|---|---|---|
| Trägerlage Beispiel 1 | 21,0 | 67 |
| Trägerlage Vergleichsbeispiel 2 | 20,0 | 10 |
| Strömungslage Beispiel 1 und | 0,50 | 965 |

(fortgesetzt)

| Messproben | Dicke in mm | Strömungswiderstand in Ns/m$^3$ |
|---|---|---|
| Vergleichsbeispiel 2 | | |
| Beispiel 1 | 22,0 | 1047 |
| Vergleichsbeispiel 2 | 21,0 | 1042 |

Es zeigt sich, dass sich die Strömungswiderstände der einzelnen Lagen in Kombination miteinander nährungsweise addieren. Zudem zeigt sich, dass die Gesamtströmungswiderstande von Beispiel 1 und Vergleichsbeispiel 2 lediglich um 5 Ns/m$^3$ differieren.

**5. Bestimmung des Schallabsorptionsgrades**

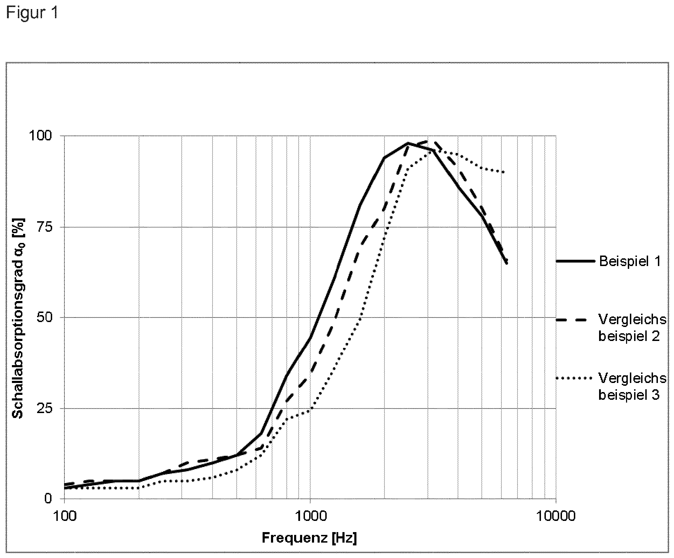

Die Schallabsorptionsgrade von Beispiel 1, Vergleichsbeispiel 2 und 3 wurden gemäß DIN EN ISO 10534-1, Teil 1 gemessen. Die Ergebnisse sind in Figur 1 dargestellt.

Es zeigt sich, dass Beispiel 1 in dem für die Automobilindustrie wichtigen Frequenzbereich von 800 Hz bis 2000 Hz hervorragende akustische Absorptionseigenschaften zeigt. Bei 1000 Hz wurde ein Schallabsorptionsgrad von 45 % erzielt, was überraschend hoch ist. So wurde bei den Vergleichsbeispiel 2 bei 1000 Hz lediglich ein Wert von 35 % gemessen und bei Vergleichsbeispiel 3 sogar nur ein Wert von 25 % bei 1000 Hz. Insgesamt ist im Frequenzbereich von etwa 800 Hz bis 2500 Hz ein überraschend höherer Schallabsorptionsgrad beim erfindungsgemäßen Vliesstoffkomposit zu beobachten, obwohl das Flächengewicht von Beispiel 1 im Vergleich zu Vergleichsbeispiel 2 und 3 geringer ist.

Bekanntermaßen wird die Absorptionsfähigkeit eines porösen Absorbers über den Strömungswiderstand in Kombination mit dem Wandabstand eingestellt. Die Wandabstände sind bei allen Beispielen gleich gewählt, so dass sie keinen Einfluss auf das Ergebnis haben können. Betrachtet man Beispiel 1 und Vergleichsbeispiel 2 so zeigt sich, dass die Gesamtströmungswiderstände von Beispiel 1 und Vergleichsbeispiel 2 sehr ähnlich sind (siehe oben Ziffer 3), so dass dieser Parameter nicht für die unerwartete Verbesserung des Schallabsorptionsgrades verantwortlich sein kann.

Ohne sich erfindungsgemäß auf einen Mechanismus festzulegen, wird vermutet, dass dieser überraschend höhere Schallabsorptionsgrad auf eine synergistische Wechselwirkung zwischen den Feinfasern und den Grobfasern der Trägerlage in Kombination mit der Strömungslage zurückzuführen ist. So wird vermutet, dass die besondere Auswahl von feinen Stapelfasern mit einem Titer von 0,3 dtex bis 2,9 dtex, insbesondere von 0,5 dtex bis 2,9 dtex und groben Stapelfasern mit einem Titer von 3 dtex bis 17 dtex in der Trägerlage die Ausbildung einer für die Schallabsorption besonders geeignete Gerüststruktur ermöglicht, die selbst in der Lage ist Schallwellen zu absorbieren. Denn durch die geeignete Auswahl von feinen und groben Stapelfasern wird es ermöglicht die Trägerlage mit einer hohen Kompressibilität und einem hohen Rückstellvermögen auszustatten, wodurch die Trägerlage optimal durch die Schallwellen zur Schwingung anregt wird und somit besonders effizient Schallenergie absorbiert werden kann.

Dabei wirkt das erfindungsgemäße Textilkomposit wie ein biegeweicher Plattenabsorber. Plattenabsorber sind hocheffiziente Absorber, die genau auf die gewünschten Frequenzbereiche eingestellt werden können. Die Schwingmasse ist durch die Masse einer Folie oder einer dünnen Platte realisiert. Beim erfindungsgemäßen Textilkomposit wird die Schwingmasse anhand der Strömungslage realisiert. Die Federung des Resonanzsystems ist beim Plattenabsorber in den meisten Fällen die Federung des Luftpolsters zwischen Folie bzw. Platte und Rückwand. Beim erfindungsgemäßen Textilkomposit fungiert die Trägerlage als Federung. So wird für das erfindungsgemäße Textilkomposit vorzugsweise folgender Aufbau gewählt: Strömungslage - Trägerlage - Wand. Wobei durch die genau definierten sehr guten Kompressions- und Wiedererholungseigenschaften der Trägerlage, die Strömungslage optimal auf der Trägerlage schwingen kann und so zusätzlich innere Verluste im Federvolumen, das heißt innerhalb der Trägerlage, entstehen.

Zusammengefasst bedeutet dies, dass die durch die erfindungsgemäße Auswahl einer spezifischen Trägerlage mit einer hohen Kompressibilität und einem hohen Rückstellvermögen die Wirkungsweise der Strömungslage als porösen Absorber mit einer Zusatzbedämpfung in der Trägerlage erweitert und somit der Schallabsorptionsgrad, insbesondere in dem für die Automobilhersteller wichtigen Frequenzbereich von 800 Hz bis 2000 Hz, mittels Zusammenspiel der Wirkungsweisen des porösen Absorbers und des biegeweichen Plattenabsorbers gesteigert werden kann.

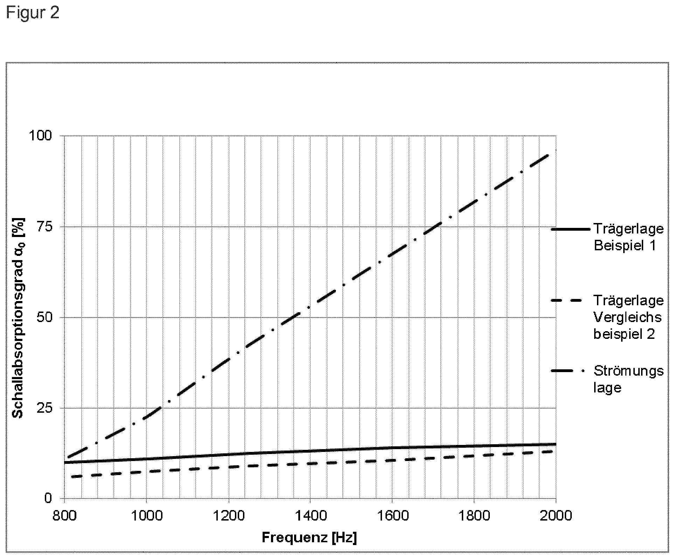

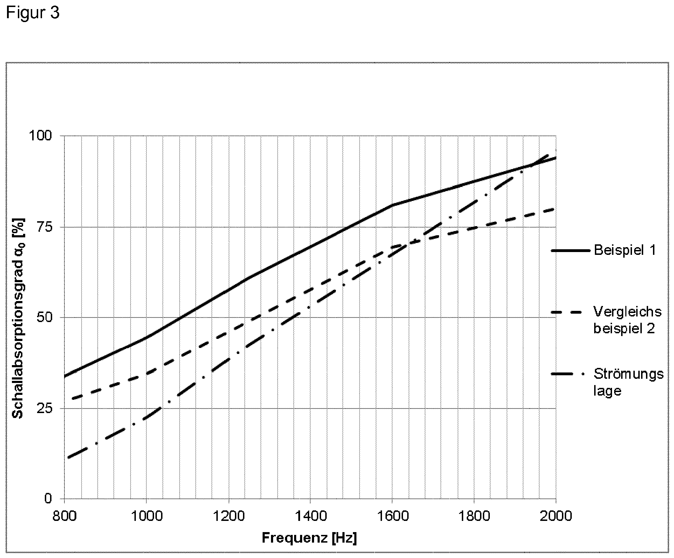

Der überraschende synergistische Effekt der oben beschriebenen akustischen Wirkungsweisen wird auch durch einen Vergleich der Figuren 2 und 3 belegt.

In Figur 2 werden zunächst nur die in den Beispielen verwendeten Einzellagen betrachtet. Konkret wird der Schallabsorptionsgrad im Impedanzrohr (DIN EN ISO 10534) der im erfindungsgemäßen Beispiel 1 und Vergleichsbeispiel 2 verwendeten Strömungslage mit der im erfindungsgemäßen Beispiel 1 verwendeten Trägerlage sowie mit der im Vergleichsbeispiel 2 verwendeten Trägerlage verglichen. Es zeigt sich, dass die Trägerlagen in etwa vergleichbare Schallabsorptionsgrade aufweisen. Während die Strömungslage signifikant höhere Schallabsorptionsgrade aufweist.

So zeigt die Trägerlage aus Beispiel 1 bei 1000 Hz einen Schallabsorptionsgrad von etwa 11 %, die Trägerlage aus Vergleichsbeispiel 2 einen Schallabsorptionsgrad von ca. 8 % und die Strömungslage einen Schallabsorptionsgrad von etwa 23 %.

In Figur 3 wird der Schallabsorptionsgrad im Impedanzrohr (DIN EN ISO 10534) des Textilkomposits gemäß Beispiel 1, des Vergleichsbeispiel 2 und der isolierten Strömungslage verglichen. Es zeigt sich, dass das erfindungsgemäße Beispiel 1 deutlich höhere Schallabsorptionsgrade als sowohl die isolierte Strömungslage als auch das Vergleichsbeispiel 2 aufweist. So zeigt das erfindungsgemäße Beispiel 1 bei 1000 Hz einen Schallabsorptionsgrad von etwa 45 %, das Vergleichsbeispiel 2 einen Schallabsorptionsgrad von ca. 35 % und die Strömungslage einen Schallabsorptionsgrad von etwa 23 %.

Der für das erfindungsgemäße Beispiel 1 ermittelte Wert liegt überraschend hoch. So war davon auszugehen, dass die Schallabsorptionsgrade der einzelnen Lagen nährungsweise miteinander addiert werden können. Dies ergäbe für das Vergleichsbeispiel 2: 8 % [Trägerlage] + 23 % [Strömungslage] = 31 % - was dem gemessenen Wert von 35 % sehr ähnelt. Somit sind keine Synergieeffekte zwischen Trägerlage und Strömungslage zu erkennen. Dagegen ergibt sich rechnerisch für Beispiel 1 ein Schallabsorptionsgrad von (11 % [Trägerlage] + 23 % [Strömungslage] = 34 %). Gemessen wurde aber ein Wert von 45 %, was 11 %-Punkte oberhalb des berechneten Wertes liegt und vermutlich auf die oben beschriebenen synergistischen Effekte zwischen der Strömungslage und der Trägerlage und deren besonderer Gerüststruktur zurückzuführen ist.

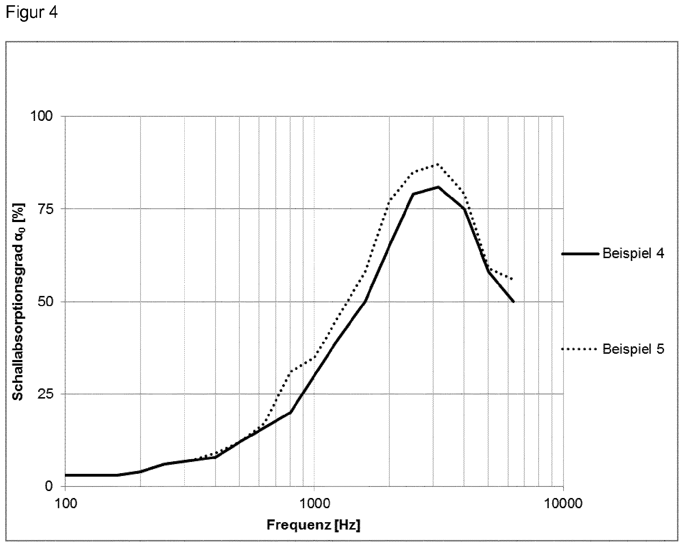

In Figur 4 ist ein Vergleich des Schallabsorptionsgrades im Impedanzrohr (DIN EN ISO 10534) des Beispiels 4 mit dem Beispiel 5 dargestellt. Es zeigt sich, dass Beispiel 4 (Feinfaseranteil von 80 Gew.%) bei 1000 Hz einen höheren Schallabsorptionsgrad aufweist als Beispiel 5 (Feinfaseranteil von 50 Gew.%).

Zur Bestimmung von erfindungsgemäß verwendeten Parametern werden die folgenden Messmethoden verwandt:

### Prüfverfahren für Vliesstoffe zur Bestimmung des Flächengewichts

Nach ISO 9073-1, wobei die Fläche der Messprobe 100 mm x 100 mm beträgt.

### Prüfverfahren für Vliesstoffe zur Bestimmung der Dicke

Nach DIN EN ISO 9073-2, Verfahren B und C.

### Bestimmung des Fasertiters

Nach DIN 53810 (Feinheit von Spinnfasern - Begriffe und Messprinzipien) anhand Mikroskop und entsprechender Software zur Ermittlung der Faserdurchmesser. Es sind 4 Mikropräparate aus insgesamt >20 Einzelfasern vorzubereiten. Pro Mikropräparat werden Fasern mit einer Schere auf eine Länge von ca. 2-3 mm gekürzt und auf einen Objektträger mit Hilfe einer Präpariernadel aufgebracht. Anschließend werden die Faserdurchmesser in μm mit Zuhilfenahme der entsprechenden Software ermittelt und gemittelt. Der gemittelte Faserdurchmesser kann im Anschluss anhand folgender Formel in den Fasertiter *Tt* umgerechnet werden:

$$Tt\,[dtex] = \frac{\pi * d^2 * \rho}{400}$$

*d*   Faserdurchmesser in μm
*p*   Dichte der Faser in g/cm³

### Bestimmung der Stapellänge

Aus einer vorhandenen Faserprobe werden 10 Faserbündelchen ausgewählt, wobei aus jedem der 10 Faserbündelchen eine Einzelfasern mit Zuhilfenahme einer Pinzette entnommen wird und die Faserlänge der 10 Einzelfasern ermittelt wird, indem ein freies Faserende in eine der zwei Einspannklemmen eingespannt wird und das zweite Faserende in die verbleibende Einspannklemme eingespannt wird. Durch Drehen des Handrades wird die Faser gestreckt, bis diese entkräuselt ist. Die Länge der Faser wird von der Skala am Messgerät abgelesen und ist in mm zu notieren. Der Mittelwert aller erfassten Ergebnisse gibt die Stapellänge an:

$$SP\,[mm] = \frac{\Sigma\,L}{n}$$

$\Sigma L$   Summe der einzelnen Faserlängen
$n$   Anzahl der Stichprobe

**Bestimmung des Schmelzpunktes**

Nach DIN EN ISO 11357-3, Dynamische Differenz-Thermoanalyse (DSC) -Teil 3: Bestimmung der Schmelz- und Kristallisationstemperatur und der Schmelz-und Kristallisationsenthalpie, wobei eine Aufheizrate von 10 K/min genommen wird.

**Bestimmung der Kompressibilität**

In Anlehnung an DIN 53885 (Bestimmung der Zusammendrückbarkeit von Textilien und textilen Erzeugnissen), wobei die Bestimmung der Zusammendrückbarkeit anhand eines anderen Prüfgerätes durchgeführt wird, als das in der Norm beschriebene. So wird eine Messprobe mit den Maßen 100 mm x 100 mm, eine Messtafel mit einer Längenskala in mm, eine Metallplatte mit den Maßen 120 mm x 120 mm und ein zylinderförmiges Gewicht mit einem Durchmesser von 55 mm und einer Masse von einem Kilogramm, bereitgestellt.

Die Dicke der Messprobe ist vor der Messung im unbelasteten Zustand mit Zuhilfenahme der Messtafel zu bestimmen. Dieser Wert beschreibt die Anfangsdicke $d_0$ in mm. Nachdem die Anfangsdicke im unbelasteten Zustand bestimmt wurde, wird im nächsten Schritt die Metallplatte (100 g) auf die Messprobe gelegt und zentral ausgerichtet. Daraufhin wird das zylinderförmige Gewicht auf die kreisförmige Markierung der Messplatte gestellt und die Messprobe somit mit ca. 1,1 kg belastet. Die absolute Kompressibilität der Messprobe wird anhand folgender Formel ermittelt und gibt die Differenz der Anfangsdicke zur Dicke im belasteten Zustand wieder:

$$K_a\,[mm] = d_0 - d_b$$

$d_0$   Anfangsdicke des Prüfkörpers in mm
$d_b$   Enddicke des Prüfkörpers in mm bei entsprechender Belastung

Die relative Kompressibilität $K_r$ in % ist:

$$K_r\,[\%] = \frac{K_a}{d_0} * 100$$

**Bestimmung des Rückstellvermögens**

In Anlehnung an DIN EN ISO 1856 (Weich-elastische polymere Schaumstoffe - Bestimmung des Druckverformungsrestes). Als Messapparatur wird der gleiche Aufbau benutzt wie bereits im Abschnitt "Bestimmung der Kompressibilität" beschrieben wurde. Bei der Bestimmung des Rückstellvermögens wird der Unterschied der Anfangs- und Enddicke eines Materials nach einer Druckverformung über eine bestimmte Zeit, bei einer bestimmten Temperatur und einer festgelegten Erholungszeit ermittelt.

Die Dicke der Messprobe ist vor der Messung im unbelasteten Zustand mit Zuhilfenahme der Messtafel zu bestimmen. Dieser Wert beschreibt die Anfangsdicke $d_0$ in mm. Nachdem die Anfangsdicke im unbelasteten Zustand bestimmt wurde, wird im nächsten Schritt die Metallplatte (100 g) auf die Messprobe gelegt und zentral ausgerichtet. Daraufhin wird das zylinderförmige Gewicht auf die kreisförmige Markierung der Messplatte gestellt und die Messprobe somit mit ca. 1,1 kg über einen Zeitraum von 24 Stunden und bei Raumtemperatur (23 °C +/- 2 °C) belastet. Nach 24 stündiger Belastung werden das Gewicht und die Metallplatte von der Messprobe entfernt und die Dicke der Messprobe wird nach 30 minütiger Erholungszeit erneut vermessen und der Druckverformungsrest wie folgt bestimmt:

$$DVR\,[\%] = \frac{d_0 - d_r}{d_0} * 100$$

$d_0$      Anfangsdicke des Prüfkörpers in mm
$d_r$      die Dicke des Prüfkörpers nach der Erholung

Aus dem Druckverformungsrest kann das Rückstellvermögen eines Materials anhand folgender Formel berechnet werden:

$$R\ [\%] = 100 - DVR$$

**Bestimmung Volumenverhältnis Luft: Faser**

Das Volumen-Verhältnis Luft zu Faser gibt Aufschluss darüber, wie porös ein Material ist. So ist davon auszugehen, dass bei einem hohen Anteil an Luft im Vergleich zu Fasern das Material eine hohe Porosität besitzt. Das Volumenverhältnis $V_{Luft}$ zu $V_{Faser}$ kann wie folgt ermittelt werden. Hierfür wird zunächst das Volumen des Prüfkörpers anhand folgender Formel berechnet:

$$V_{Prüfkörper}\ [cm^3] = l * b * d$$

$l$      Länge des Prüfkörpers in mm
$b$      Breite des Prüfkörpers in mm
$d$      Dicke des Prüfkörpers in mm, gemessen nach DIN EN ISO 9073-2,

Verfahren B und C
Nachdem nun das Volumen des Prüfkörpers bestimmt wurde, wird im nächsten Schritt das Volumen der im Vliesstoff enthaltenen Fasern anhand folgender Formel ermittelt:

$$V_{Faser}\ [cm^3] = \frac{m_{Faser}}{\rho_{Faserpolymer}}$$

$m_{Faser}$      Fasermasse des Prüfkörpers in g
$\rho_{Faserpolymer}$      Dichte des Faserpolymers in g/cm$^3$

Wobei bevorzugt Stapelfasern aus dem Polymer Polyethylentherephtalat in der Trägerlage Einsatz finden und somit von einer Faserdichte von ca. 1,38 g/cm$^3$ ausgegangen werden kann. Nach der Berechnung des Faservolumens, kann nun im weiteren Schritt die Bestimmung Luftvolumens anhand folgender Formel erfolgen:

$$V_{Luft}\ [cm^3] = V_{Prüfkörper} - V_{Faser}$$

Sofern das Luftvolumen und das Faservolumen des Prüfkörpers bestimmt wurden, können diese zwei Volumenwerte nun ins Verhältnis zueinander gesetzt werden.

**Prüfverfahren zur Bestimmung des Strömungswiderstandes**

Nach DIN EN 29053, Verfahren A (Luftgleichstromverfahren), wobei der effektive Probendurchmesser 100 mm beträgt und der Luftdruck 1000 mbar entspricht.

**Prüfverfahren zur Bestimmung des Schallabsorptionsgrades und der Impedanz im Impedanzrohr**

Nach DIN EN ISO 10534-1, Teil 1: Verfahren mit Stehwellenverhältnis (ISO 10534-1:2001-10), wobei Rohrlänge A 100 cm und Rohrquerschnitt A 77 cm$^2$ entspricht und Rohrlänge B 30 cm und Rohrquerschnitt B 6,6 m$^2$ beträgt. Die Prüfkörper des Textilkomposits und der Trägerlagen werden direkt an der schallharten Wand angelegt und gemessen. Die Strömungslage wird in einem Abstand von 20 mm zur schallharten Wand gemessen.

**Patentansprüche**

1. Schallabsorbierendes Textilkomposit, umfassend

   a) mindestens eine offenporige Trägerlage umfassend grobe Stapelfasern mit einem Titer von 3 dtex bis 12 dtex in einem Anteil von - 5 Gew.% bis 85 Gew.% und feine Stapelfasern mit einem Titer von 0,5 dtex bis 2,9 dtex in einem Anteil von 10 Gew.% bis 90 Gew.%, als Gerüstfasern und
   b) eine auf der Trägerlage angeordnete mikroporöse Strömungslage umfassend Mikrofasern mit einem Faserdurchmesser von unter 10 $\mu$m,

   wobei der Strömungswiderstand des schallabsorbierenden Textilkomposits von 250 Ns/m$^3$ bis 5000 Ns/m$^3$, insbesondere von 250 Ns/m$^3$ bis 2000 Ns/m$^3$ beträgt, **dadurch gekennzeichnet, dass** die Trägerlage zumindest teilweise verschmolzene Kern/Mantel-Fasern, als weitere Fasern enthält.

2. Schallabsorbierendes Textilkomposit nach Anspruch 1, **gekennzeichnet durch** eine Kompressibilität von 70 % bis 100 %, bevorzugter von 75 % bis 100 % und insbesondere von 80 % bis 100 % und/oder ein Rückstellvermögen von 70 % bis 100 %, bevorzugter von 75 % bis 100 % und insbesondere von 80 % bis 100 %.

3. Schallabsorbierendes Textilkomposit nach Anspruch 1 oder 2, **dadurch gekennzeichnet, dass** die Trägerlage ein Vliesstoff ist.

4. Schallabsorbierendes Textilkomposit nach einem oder mehreren der vorangehenden Ansprüche, **dadurch gekennzeichnet, dass** dass die Trägerlage Bindefasern als weitere Fasern enthält und der Anteil der groben Stapelfasern von 40 Gew.% bis 80 Gew.%, bevorzugter von 50 Gew.% bis 80 Gew.% und insbesondere von 60 Gew.% bis 80 Gew.%, jeweils bezogen auf das Gesamtgewicht der Trägerlage beträgt.

5. Schallabsorbierendes Textilkomposit nach einem oder mehreren der vorangehenden Ansprüche, **dadurch gekennzeichnet, dass** der Anteil der feinen Stapelfasern von 10 Gew.% bis 50 Gew.%, bevorzugter von 10 Gew.% bis 40 Gew.% und insbesondere von 10 Gew.% bis 30 Gew.%, jeweils bezogen auf das Gesamtgewicht der Trägerlage beträgt.

6. Schallabsorbierendes Textilkomposit nach einem oder mehreren der vorangehenden Ansprüche, **dadurch gekennzeichnet, dass** die als Gerüstfasern eingesetzten feinen und groben Stapelfasern, unabhängig voneinander eine Stapellänge von 20 mm bis 80 mm, bevorzugter von 25 mm bis 80 mm, insbesondere von 30 mm bis 80 mm, aufweisen.

7. Schallabsorbierendes Textilkomposit nach einem oder mehreren der vorangehenden Ansprüche, **dadurch gekennzeichnet, dass** die Trägerlage bindergebunden ist, wobei als Binder bevorzugt Polyacrylate, Polystyrole, Polyvinylacetatethylene, Polyurethane sowie deren Gemische und CoPolymere eingesetzt werden.

8. Schallabsorbierendes Textilkomposit nach einem oder mehreren der vorangehenden Ansprüche, **dadurch gekennzeichnet, dass** die Trägerlage ein Volumenverhältnis von Luft zu Faser von 75:1 bis 250:1, bevorzugter von 100:1 bis 225:1, insbesondere von 125:1 bis 200:1 aufweist.

9. Schallabsorbierendes Textilkomposit nach einem oder mehreren der vorangehenden Ansprüche, **dadurch gekennzeichnet, dass** die Strömungslage Mikrofasern mit einem Titer von unter 10 $\mu$m, bevorzugt von 0,5 $\mu$m bis 5 $\mu$m, noch bevorzugter von 1 $\mu$m bis 3 $\mu$m und insbesondere Meltblown-Fasern, umfasst.

10. Schallabsorbierendes Textilkomposit nach einem oder mehreren der vorangehenden Ansprüche, **gekennzeichnet durch** einen Schallabsorptionsgrad von 30 % bis 100 %, bevorzugter von 40 % bis 100 %, noch bevorzugter von 50 % bis 100 %, jeweils bei 1000 Hz.

11. Schallabsorbierendes Textilkomposit nach einem oder mehreren der vorangehenden Ansprüche, **gekennzeichnet durch** ein Flächengewicht von 50 g/m$^2$ bis 350 g/m$^2$, bevorzugter von 100 g/m$^2$ bis 300 g/m$^2$, und insbesondere von 150 g/m$^2$ bis 250 g/m$^2$.

12. Schallabsorbierendes Textilkomposit nach einem oder mehreren der vorangehenden Ansprüche, **gekennzeichnet durch** eine Dicke von 5 mm bis 35 mm, bevorzugter von 10 mm bis 30 mm, und insbesondere von 15 mm bis 25 mm.

**13.** Verfahren zur Herstellung eines Textilkomposits mit einem Strömungswiderstand von 250 Ns/m$^3$ bis 5000 Ns/m$^3$, insbesondere von 250 Ns/m$^3$ bis 2000 Ns/m$^3$ beträgt, umfassend folgende Schritte

> e) Bereitstellen und/oder Herstellen mindestens einer offenporigen Trägerlage umfassend grobe Stapelfasern mit einem Titer von 3 dtex bis 12 dtex in einem Anteil von 5 Gew.% bis 85 Gew.%, und feine Stapelfasern mit einem Titer von 0,5 dtex bis 2,9 dtex in einem Anteil von 10 Gew.% bis 90 Gew.%, als Gerüstfasern;
> f) Bereitstellen und/oder Herstellen einer mikroporösen Strömungslage umfassend Mikrofasern mit einem Faserdurchmesser von unter 10 $\mu$m;
> g) Anordnen der Strömungslage auf der Trägerlage;
> h) Verbinden der Trägerlage und der Strömungslage,
> und/oder umfassend folgende Schritte:
>
> c') Bereitstellen und/oder Herstellen mindestens einer offenporigen Trägerlage umfassend grobe Stapelfasern mit einem Titer von 3 dtex bis 12 dtex und feine Stapelfasern mit einem Titer von 0,3 dtex bis 2,9 dtex, insbesondere von 0,5 dtex bis 2,9 dtex als Gerüstfasern
> d') Aufspinnen eines Meltblown-Vliesstoffs als mikroporöse Strömungslage umfassend Mikrofasern mit einem Faserdurchmesser von unter 10 $\mu$m auf die Trägerlage.

**14.** Verwendung eines schallabsorbierenden Textilkomposits nach einem oder mehreren der Ansprüche 1 bis 12 zur Schallabsorption im Automobilbereich.

## Claims

**1.** Sound-absorbing textile composite comprising

> a) at least one open-pore carrier ply comprising coarse staple fibres having a linear density of 3 dtex to 12 dtex in a proportion of - 5% by weight to 85% by weight and fine staple fibres having a linear density of 0.5 dtex to 2.9 dtex in a proportion of 10% by weight to 90% by weight as scaffold fibres, and
> b) a microporous flow ply which is disposed atop the carrier ply and comprises microfibres having a fibre diameter below 10 $\mu$m,

where the flow resistance of the sound-absorbing textile composite is from 250 Ns/m$^3$ to 5000 Ns/m$^3$, especially from 250 Ns/m$^3$ to 2000 Ns/m$^3$, **characterized in that** the carrier ply contains at least partly fused core/shell fibres as further fibres.

**2.** Sound-absorbing textile composite according to Claim 1, **characterized by** a compressibility of 70% to 100%, more preferably of 75% to 100% and especially of 80% to 100% and/or a resilience of 70% to 100%, more preferably of 75% to 100% and especially of 80% to 100%.

**3.** Sound-absorbing textile composite according to Claim 1 or 2, **characterized in that** the carrier ply is a nonwoven.

**4.** Sound-absorbing textile composite according to one or more of the preceding claims, **characterized in that** the carrier ply contains binder fibres as further fibres and the proportion of coarse staple fibres is from 40% by weight to 80% by weight, more preferably from 50% by weight to 80% by weight and especially from 60% by weight to 80% by weight, based in each case on the total weight of the carrier ply.

**5.** Sound-absorbing textile composite according to one or more of the preceding claims, **characterized in that** the proportion of the fine staple fibres is from 10% by weight to 50% by weight, more preferably from 10% by weight to 40% by weight and especially from 10% by weight to 30% by weight, based in each case on the total weight of the carrier ply.

**6.** Sound-absorbing textile composite according to one or more of the preceding claims, **characterized in that** the fine and coarse staple fibres used as scaffold fibres independently have a staple length of 20 mm to 80 mm, more preferably of 25 mm to 80 mm, especially of 30 mm to 80 mm.

**7.** Sound-absorbing textile composite according to one or more of the preceding claims, **characterized in that** the carrier ply is bound by a binder, the binders used preferably being polyacrylates, polystyrenes, polyvinylacetate-ethylenes, polyurethanes and mixtures and copolymers thereof.

8. Sound-absorbing textile composite according to one or more of the preceding claims, **characterized in that** the carrier ply has a volume ratio of air to fibre of 75:1 to 250:1, preferably of 100:1 to 225:1, especially of 125:1 to 200:1.

9. Sound-absorbing textile composite according to one or more of the preceding claims, **characterized in that** the flow ply comprises microfibres having a linear density of less than 10 $\mu$m, preferably of 0.5 $\mu$m to 5 $\mu$m, even more preferably of 1 $\mu$m to 3 $\mu$m, and especially meltblown fibres.

10. Sound-absorbing textile composite according to one or more of the preceding claims, **characterized by** a sound absorption level of 30% to 100%, more preferably of 40% to 100%, even more preferably of 50% to 100%, in each case at 1000 Hz.

11. Sound-absorbing textile composite according to one or more of the preceding claims, **characterized by** a basis weight of 50 g/m$^2$ to 350 g/m$^2$, more preferably of 100 g/m$^2$ to 300 g/m$^2$, and especially of 150 g/m$^2$ to 250 g/m$^2$.

12. Sound-absorbing textile composite according to one or more of the preceding claims, **characterized by** a thickness of 5 mm to 35 mm, more preferably of 10 mm to 30 mm, and especially of 15 mm to 25 mm.

13. Process for producing a textile composite having a flow resistance of 250 Ns/m$^3$ to 5000 Ns/m$^3$, especially from 250 Ns/m$^3$ to 2000 Ns/m$^3$, comprising the following steps:

    e) providing and/or producing at least one open-pore carrier ply comprising coarse staple fibres having a linear density of 3 dtex to 12 dtex in a proportion of 5% by weight to 85% by weight and fine staple fibres having a linear density of 0.5 dtex to 2.9 dtex in a proportion of 10% by weight to 90% by weight as scaffold fibres;
    f) providing and/or producing a microporous flow ply comprising microfibres having a fibre diameter of less than 10 $\mu$m;
    g) arranging the flow ply atop the carrier ply;
    h) bonding the carrier ply and the flow ply, and/or comprising the following steps:

    c') providing and/or producing at least one open-pore carrier ply comprising coarse staple fibres having a linear density of 3 dtex to 12 dtex and fine staple fibres having a linear density of 0.3 dtex to 2.9 dtex, especially of 0.5 dtex to 2.9 dtex, as scaffold fibres;
    d') spinning a meltblown nonwoven as microporous flow ply comprising microfibres having a fibre diameter of less than 10 $\mu$m onto the carrier ply.

14. Use of a sound-absorbing textile composite according to one or more of Claims 1 to 12 for absorption of sound in the automotive sector.

**Revendications**

1. Composite textile insonorisant, comprenant

    a) au moins une couche de support à pores ouverts comprenant des fibres discontinues grossières d'un titre de 3 dtex à 12 dtex dans une proportion de 5 % en poids à 85 % en poids et des fibres discontinues fines d'un titre de 0,5 dtex à 2,9 dtex dans une proportion de 10 % en poids à 90 % en poids, comme fibres de charpente et
    b) une couche d'écoulement microporeuse disposée sur la couche de support et comprenant des microfibres d'un diamètre de fibre inférieur à 10 $\mu$m,

    la résistance à l'écoulement du composite textile insonorisant étant de 250 Ns/m$^3$ à 5000 Ns/m$^3$, en particulier de 250 Ns/m$^3$ à 2000 Ns/m$^3$, **caractérisé en ce que** la couche de support contient comme autres fibres des fibres de cœur/gaine au moins partiellement fondues.

2. Composite textile insonorisant selon la revendication 1, **caractérisé par** une compressibilité de 70 % à 100 %, plus préférablement de 75 % à 100 % et en particulier de 80 % à 100 % et/ou une élasticité de 70 % à 100 %, plus préférablement de 75 % à 100 % et en particulier de 80 % à 100 %.

**3.** Composite textile insonorisant selon la revendication 1 ou 2, **caractérisé en ce que** la couche support est un non-tissé.

**4.** Composite textile insonorisant selon une ou plusieurs des revendications précédentes, **caractérisé en ce que** la couche de support contient comme autres fibres des fibres de liaison et la proportion de fibres discontinues grossières est de 40 % en poids à 80 % en poids, plus préférablement de 50 % en poids à 80 % en poids, et en particulier de 60 % en poids à 80 % en poids, à chaque fois par rapport au poids total de la couche de support.

**5.** Composite textile insonorisant selon une ou plusieurs des revendications précédentes, **caractérisé en ce que** la proportion de fibres discontinues fines est de 10 % en poids à 50 % en poids, plus préférablement de 10 % en poids à 40 % en poids et en particulier de 10 % en poids à 30 % en poids, à chaque fois par rapport au poids total de la couche de support.

**6.** Composite textile insonorisant selon une ou plusieurs des revendications précédentes, **caractérisé en ce que** les fibres discontinues fines et grossières utilisées comme fibres de charpente ont, indépendamment les unes des autres, une longueur de 20 mm à 80 mm, plus préférablement de 25 mm à 80 mm, en particulier de 30 mm à 80 mm.

**7.** Composite textile insonorisant selon une ou plusieurs des revendications précédentes, **caractérisé en ce que** la couche de support est liée au liant, les liants étant de préférence les polyacrylates, les polystyrènes, l'éthylène-acétate de polyvinyle, les polyuréthanes et des mélanges et copolymères de ceux-ci.

**8.** Composite textile insonorisant selon une ou plusieurs des revendications précédentes, **caractérisé en ce que** la couche de support a un rapport volumique air/fibre de 75:1 à 250:1, plus préférablement de 100:1 à 225:1, en particulier de 125:1 à 200:1.

**9.** Composite textile insonorisant selon une ou plusieurs des revendications précédentes, **caractérisé en ce que** la couche d'écoulement comprend des microfibres d'un titre inférieur à 10 $\mu$m, de préférence de 0,5 $\mu$m à 5 $\mu$m, encore plus préférablement de 1 $\mu$m à 3 $\mu$m et en particulier les fibres soufflées à l'état fondu.

**10.** Composite textile insonorisant selon une ou plusieurs des revendications précédentes, **caractérisé par** un niveau d'absorption acoustique de 30 % à 100 %, plus préférablement de 40 % à 100 %, encore plus préférablement de 50 % à 100 %, à chaque fois à 1000 Hz.

**11.** Composite textile insonorisant selon une ou plusieurs des revendications précédentes, **caractérisé par** un poids surfacique de 50 g/m$^2$ à 350 g/m$^2$, plus préférablement de 100 g/m$^2$ à 300 g/m$^2$, et en particulier de 150 g/m$^2$ à 250 g/m$^2$.

**12.** Composite textile insonorisant selon une ou plusieurs des revendications précédentes, **caractérisé par** une épaisseur de 5 mm à 35 mm, plus préférablement de 10 mm à 30 mm, et en particulier de 15 mm à 25 mm.

**13.** Procédé de production d'un composite textile ayant une résistance à l'écoulement de 250 Ns/m$^3$ à 5000 Ns/m$^3$, en particulier de 250 Ns/m$^3$ à 2000 Ns/m$^3$, le procédé comprenant les étapes suivantes

> e) fournir et/ou produire au moins une couche de support à pores ouverts comprenant des fibres discontinues grossières ayant un titre de 3 dtex à 12 dtex dans une proportion de 5 % en poids à 85 % en poids, et des fibres discontinues fines ayant un titre de 0,5 dtex à 2,9 dtex dans une proportion de 10 % en poids à 90 % en poids, comme fibres de charpente ;
> f) fournir et/ou produire une couche d'écoulement microporeuse comprenant des microfibres d'un diamètre de fibre inférieur à 10 $\mu$m ;
> g) disposer la couche d'écoulement sur la couche de support ;
> h) relier la couche de support et la couche d'écoulement, et/ou comprenant les étapes suivantes:

>> c') fournir et/ou produire au moins une couche de support à pores ouverts comprenant des fibres discontinues grossières ayant un titre de 3 dtex à 12 dtex et des fibres discontinues fines ayant un titre de 0,3 dtex à 2,9 dtex, en particulier de 0,5 dtex à 2,9 dtex comme fibres de charpente
>> d') filer un non-tissé soufflé à l'état fondu sous la forme d'une couche d'écoulement microporeuse comprenant des microfibres d'un diamètre de fibre inférieur à 10 $\mu$m sur la couche de support.

**14.** Utilisation d'un composite textile insonorisant selon une ou plusieurs des revendications 1 à 12 pour l'absorption acoustique dans le secteur automobile.

Figur 1

Figur 2

Figur 3

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5298694 A
- DE 10163576 B4
- EP 1058618 B1
- CH 693409 A5